# EUROPÄISCHE PATENTSCHRIFT

(11) **EP 0 437 284 B1**
(45) Veröffentlichungstag und Bekanntmachung des Hinweises auf die Patenterteilung: **25.05.1994**
(21) Anmeldenummer: 91102543.5
(22) Anmeldetag: 24.10.1990
(51) Int. Cl.: G01L 1/20, G01L 5/00, B60D 1/58

(54) **Kraftmessvorrichtung**
Force measuring device
Dispositif pour mesurer la force

(30) Priorität: 25.10.1989 DE 3935479
(43) Veröffentlichungstag der Anmeldung: 17.07.1991
(62) Teilanmeldung aus: 90120370.3
(73) Patentinhaber: Pfister GmbH, 86165 Augsburg (DE)
(72) Erfinder: Häfner, Hans Wilhelm, W-8890 Aichach-Walchshofen (DE); Heimbach, Manfred, W-8900 Augsburg (DE)
(74) Vertreter: Kahler, Kurt, Dipl.-Ing.

(56) Entgegenhaltungen:
- EP-A- 0 185 296
- EP-A- 0 302 437

## Beschreibung

Die Erfindung betrifft eine Kraftmeßvorrichtung gemäß dem Oberbegriff des Patentanspruchs 1 sowie eine daraus zusammengesetzte Kraftmeßanordnung.

Die EP 0 205 509 C1 beschreibt eine Kraftmeßvorrichtung mit einem topfförmigen Außenelement und einem darin unter Bildung eines engen Ringspalts eingesetzten Kolbenelement, wobei der enge Ringspalt und ein zwischen der inneren Stirnfläche des Kolbenelements und dem Boden des topfförmigen Außenelements gebildeter zylindrischer Raum mit elastomerem Material gefüllt ist, das fest an den Kontaktflächen haftet und im wesentlichen blasenfrei ist. Ein Drucksensor ist in der Bodenwand des Außenelements eingesetzt und ist in Drückübertragungskontakt mit dem elastomeren Material.

Die US-4,864,874-A1 beschreibt eine Kraftmeßvorrichtung mit beispielsweiser Anwendung auf eine Anhängerkupplung, mit einem Aufbau nach dem Prinzip der vorstehend beschriebenen Kraftmeßvorrichtung. Hierbei wird jedoch kein topfförmiges Außenelement verwendet, sondern ein zylindrisches Außenelement und ein dazu passendes Innenelement, das eine Durchgangsöffnung besitzt. Der enge Ringspalt ist in einen ersten und zweiten Ringspaltbereich mit jeweils unterschiedlichem Ringdurchmesser durch einen zylindrischen Ringraum unterteilt, der in einer Übergangsstufe gebildet und ebenfalls mit elastomerem Material gefüllt ist. Mindestens ein Drucksensor kann in dem elastomeren Material im Ringraum eingebettet sein. Sich gegenüberstehende Radialflächen des Innen- und Außenelements bilden Anschläge, die eine Relativbewegung zwischen Innen- und Außenelement in Zugrichtung zueinander eng begrenzen. Zur Messung in einer und in einer entgegengesetzten Richtung sind zwei derartige Kraftmeßvorrichtungen gegeneinandergeschaltet.

Der Erfindung liegt die Aufgabe zugrunde, eine robuste, einfach aufgebaute und dennoch genau messende Kraftmeßvorrichtung anzugeben, die gegen eine schädliche Zugwirkung geschützt ist. Ferner soll ein Messen in den beiden entgegengesetzten Richtungen möglich sein.

Diese Aufgabe wird gelöst durch eine Kraftmeßvorrichtung mit den Merkmalen des Patentanspruchs 1. Eine Kraftmeßanordnung unter Verwendung derartiger Kraftmeßvorrichtungen ist im Anspruch 9 gekennzeichnet.

Die Vorspannungseinrichtungen schützen in einfacher Weise die Kraftmeßvorrichtungen gegen schädliche Belastung in Zugrichtung. Bei vorbestimmter Vorspannung lassen sich durch Druckdifferenzbildung auch Zugkräfte messen.

Weitere vorteilhafte Ausgestaltungen sind Gegenstand der abhängigen Ansprüche.

Ausführungsbeispiele und mögliche Verwendungen der erfindungsgemäßen Kraftmeßvorrichtungen werden in den Zeichnungen näher erläutert. Es zeigen:
- Fig. 1: eine Anhängerkupplung mit einer angebauten Kraftmeßzelle;
- Fig. 2: eine Draufsicht auf die Anhängerkupplung mit Kraftmeßzelle gemäß Fig. 1;
- Fig. 3: einen Längsschnitt durch eine Anhängerkupplung mit Kraftmeßzelle gemäß Fig. 1;
- Fig. 4: eine zweite Ausführungsform einer herkömmlichen Anhängerkupplung;
- Fig. 5: eine Anhängerkupplung gemäß Fig. 4 mit der erfindungsgemäßen Ausbildung der Kraftmeßzellen;
- Fig. 5a: eine abgewandelte Einzelheit gemäß Fig. 5
- Fig. 6: eine Draufsicht einer dritten Ausführungsform der Anhängerkupplung in Form einer Sattelkupplung;
- Fig. 7: eine Seitenansicht der Anhängerkupplung gemäß Fig. 6;
- Fig. 8: eine Schnittdarstellung durch eine Einzelheit der Anhängerkupplung gemäß Fig. 7.

Einzelheiten der hier nicht beanspruchten Anhängerkupplung sind aus der Stammanmeldung EP 90 120 370.3 entnehmbar.

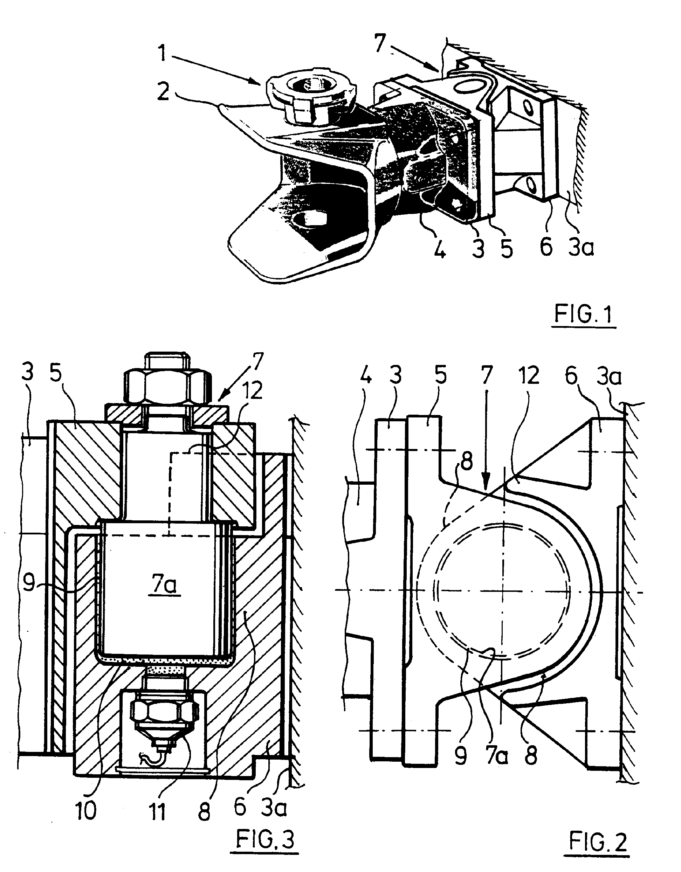

Fig. 1 zeigt eine Anhängerkupplung 1 mit einer Zugöse 2, die über ein Abstützteil 3 an einem Zugfahrzeug 3a befestigt ist. Die Zugöse 2 ist in einem Stützring 4 axial verdrehbar.

Zwischen dem Abstützteil 3 und dem Zugfahrzeug 3a ist eine Kraftmeßzelle 7 zwischengeschaltet, die die auf die Anhängerkupplung 1 wirkenden Abstützkräfte in vertikaler Richtung erfaßt. Hierzu ist das Abstützteil 3 der Anhängerkupplung 1 mit einem Kupplungsflansch 5 der Kraftmeßzelle 7 verbunden, die ihrerseits mit einem Anschlußflansch 6 an dem Zugfahrzeug 3a befestigt ist.

In Fig. 2 ist eine Draufsicht auf die Anhängerkupplung 1 zusammen mit der Kraftmeßzelle 7 dargestellt, während in Fig. 3 eine Schnittdarstellung der Fig. 2 gezeigt ist. Das Abstützteil 3 stützt sich über den Kupplungsflansch 5 und über einen Kolben 7a an dem Anschlußflansch 6 ab, der als ein Gehäuse 8 für den Kolben 7a ausgebildet ist. Zwischen dem Kolben 7a und dem topfartigen Gehäuse 8 ist ein Raum am Boden des Gehäuses 8 und ein schmaler Ringspalt 9 vorgesehen, der vollständig mit elastomerem Material 10 gefüllt ist (wie punktiert angezeigt). Mit dem elastomeren Material 10, z.B. einem fest anhaftenden Silikon, steht ein Drucksensor 11, der unterhalb des Bodens des Gehäuses 8 angebracht ist, in Verbindung.

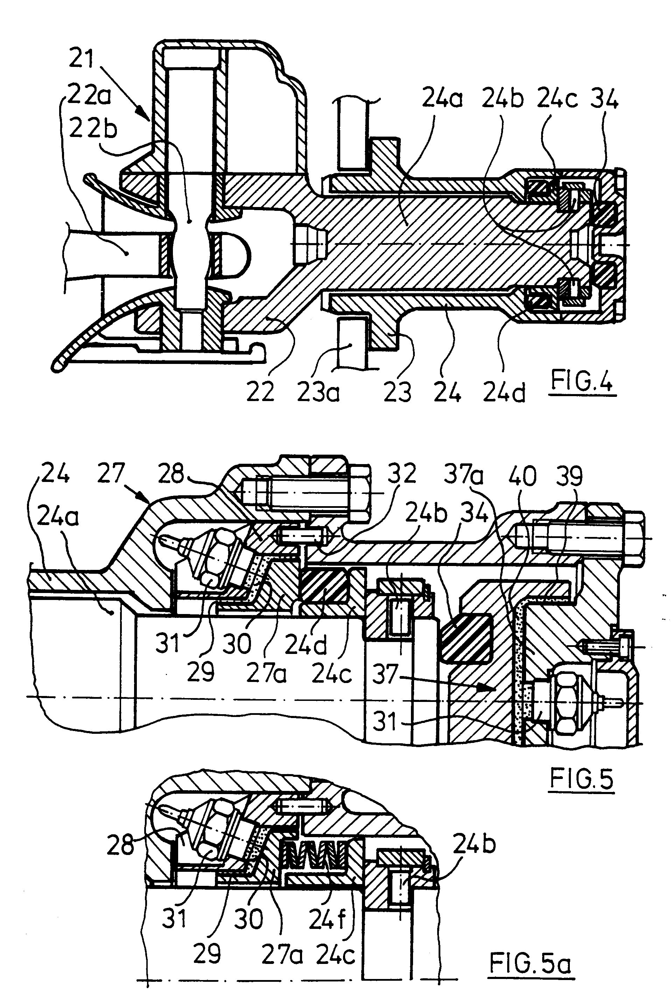

In Fig. 4 ist eine zweite Ausführungsform einer Anhängerkupplung 21 dargestellt. In die Zugöse 22 ist eine Anhängerdeichsel 22a eines Anhängers eingeführt und mittels eines Steckbolzens 22b festgelegt. Die Zugöse 22 geht in einen Bolzen 24a über, der in einem Stützring 24 axial verdrehbar gelagert ist. Der Stützring 24 stützt sich mit seinem Abstützteil 23 nach hinten gegen ein Rahmenteil des Zugfahrzeugs 23a ab. Der Bolzen 24a als inneres Element trägt an seinem vorderen Ende ein Axiallager 24b, um größere Verdrehbewegungen des Bolzens 24a zu ermöglichen. Die Zugkraft wird dabei über einen Übertragungsring 24c auf einen Dämpfungsring 24d übertragen, der sich über den Stützring 24 als äußeres Element abstützt. In entgegengesetzter Richtung ist ein weiterer Dämpfungsring 34 vorgesehen, um wechselnde, stoßartige Zug- und Druckbelastungen auf die Anhängerkupplung 21 abzudämpfen. Die hier in Fig. 4 dargestellte Anhängerkupplung ist Stand der Technik und wird bei vielen LKW eingesetzt.

Die erfindungsgemäß nachgerüstete Ausführungsform dieser Anhängerkupplung ist in Fig. 5 und Fig. 5a dargestellt, wobei letztere die erfindungsgemäß ausgebildete Kraftmeßvorrichtung zeigt.

Hierbei stützt sich der Bolzen 24a als inneres Element wiederum über das Axiallager 24b, den Übertragungsring 24c und den Dämpfungsring 24d in Zugrichtung ab. Der Dämpfungsring 24d wirkt hierbei jedoch auf eine zwischengeschaltete Kraftmeßzelle 27, nämlich unmittelbar auf deren Kolben 27a, der im engen Ringspalt 29a, 29b geführt über das elastomere Material 30 (wie punktiert angezeigt) im zylindrischen Ringraum 30c den Drucksensor 31 beaufschlagt. Der Drucksensor 31 ist hier in vorteilhafter Weise in Form einer Art Zündkerze ausgebildet und in einer Schulter des Gehäuses 28 eingeschraubt, so daß der Drucksensor 31 leicht ausgetauscht werden kann. Das Gehäuse 28 ist über einen Sicherungsstift 32, gleichwirkend mit dem Anschlag 12 in Fig. 2 fixiert. Durch diese im Kraftweg zwischen Zugfahrzeug 23a und Anhängerkupplung 21 eingebaute Kraftmeßzelle 27 werden die Zugkräfte in der Anhängerkupplung 21 erfaßt, während die Druckkräfte in der Anhängerkupplung 21 über einen Dämpfungsring 34, ein Gehäuse 38, auf eine im rechten Bereich dargestellte zweite Kraftmeßzelle 37 eingeleitet werden.

Hierbei werden in Umkehrung der oben beschriebenen Kraftmeßzelle 27 die Stoßkräfte über das Gehäuse 38 eingeleitet, während der durchmesserkleinere Kolben 37a den Drucksensor 31 aufnimmt. Diese Anordnung des Drucksensors 31 im Boden des Kolbens 37a ist dabei von Bedeutung, da hierdurch das Innere des Kolbens 37a in raumsparender Weise für die Unterbringung des Drucksensors 31 genutzt wird. Eine derartige Kraftmeßzelle weist eine besonders geringe Bauhöhe bzw. Baubreite auf und ist besonders für kompakte Anhängerkupplungen geeignet, jedoch auch für ähnliche Vorrichtungen mit engem Einbauraum für die Kraftmeßzelle. Durch die entgegengesetzte Anordnung zweier Kraftmeßzellen 27 und 37 sind sämtliche in Zug- und Druckrichtung wirkenden Kräfte in der Anhängerkupplung 21 zu erfassen.

Fig. 5a zeigt die erfindungsgemäße Ausführung, wobei der Dämpfungsring 24d bei ansonsten gleichem Aufbau durch ein Tellerfederpaket 24f ersetzt ist, das zwischen der Rückseite 27b des Kolbens 27a und einer radialen Fläche des Übertragungsrings 24c abgestützt ist. Dadurch wird der Kolben 27a belastet; ohne äußere Belastung ist die Kraftmeßzelle 27 in Druckrichtung vorgespannt. Werden über den Bolzen 24a Zugkräfte eingeleitet, so erhöht sich der Druck am Drucksensor 31, während bei Druckbelastung in entgegengesetzter Richtung, die in Fig. 5 durch die rechte Kraftmeßzelle erfaßt wurden, die Vorspannung verringert wird. Dabei entspricht die Federvorspannung zumindest der maximalen Druckkraft. Dadurch sind mit einer einzigen Kraftmeßzelle 27 sowohl Zug- als auch Druckkräfte zu messen, so daß aufgrund der Federvorspannung in Fig. 5a auf die zweite Kraftmeßzelle 37 in Fig. 5 verzichtet werden kann.

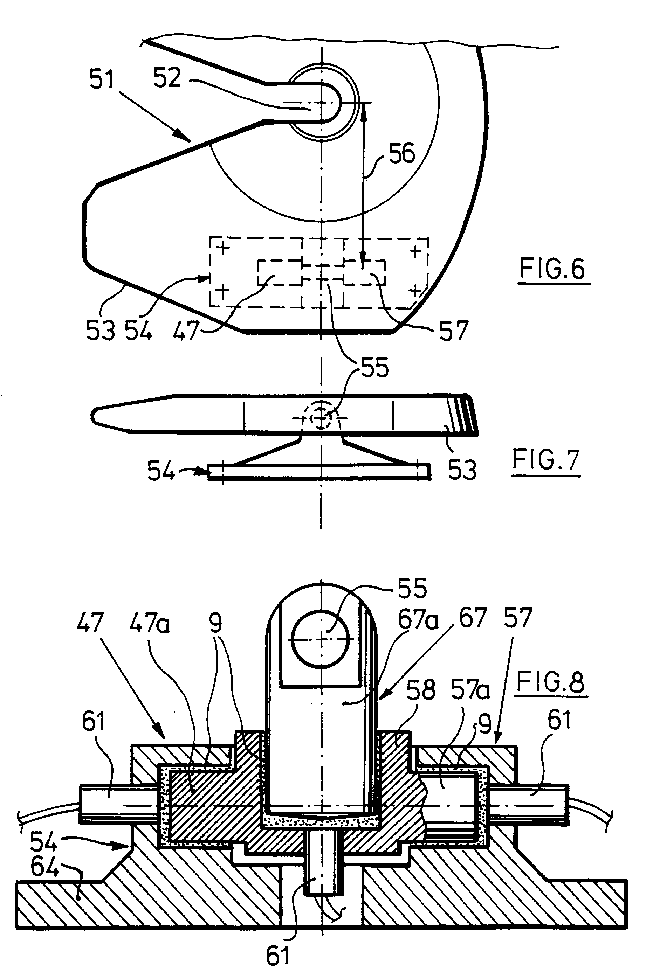

In Fig. 6 und 7 ist eine Sattelkupplung 51 nach DIN 74 081 dargestellt. Die Zugöse 52 ist hier im Zentrum einer Sattelplatte 53 vorgesehen, die um eine Fahrzeug-Querachse 55 auf zwei seitlichen Lagerböcken 54 schwenkbar gelagert ist.

In Fig. 8 ist eine Ausgestaltung der Anhängerkupplung in Form der Sattelkupplung nach Fig. 6 und 7 dargestellt, wobei eine Kraftmeßanordnung unter Verwendung der erfindungsgemäßen Kraftmeßvorrichtung ausgebildet werden könnte. Dabei ist ein an der Sattelkupplung austauschbarer Lagerbock 54 vorgesehen, der eine Lagerung für die Querachse 55 aufweist. Die Querachse 55 ist in einem ersten Kolben 67a vorgesehen, der in einem Gehäuse 58 in vertikaler Richtung eingepaßt ist und auf einen unten liegenden Sensor 61 wirkt. Neben dieser ersten vertikal ausgerichteten Kraftmeßzelle 67 sind zwei weitere horizontal ausgerichtete Kraftmeßzellen 47 und 57 mit jeweils gleichen Sensoren 61 vorgesehen, die die Zugkräfte und die Druckkräfte erfassen. Hierbei ist vorteilhaft, daß das Gehäuse 58 der ersten Kraftmeßzelle 67 zugleich die Kolben 47a und 57a der zweiten und dritten Kraftmeßzelle 47 und 57 bildet. Somit werden durch ein einstückiges Bauteil 58 innerhalb des Lagerbockes 64 sämtliche für die Regelung von Antiblockiersystemen notwendigen Kräfte erfaßt. Sofern es fertigungstechnisch vorteilhafter ist, können die Kraftmeßzellen 47 und 57 entlang der Linie auch voneinander getrennt sein, so daß das vertikale Gehäuse der Kraftmeßzelle praktisch zwischen den beiden horizontalen Kraftmeßzellen 47 und 57 eingespannt und geführt ist. Anstatt zweier horizontaler Kraftmeßzellen 47 und 57 kann entsprechend der Ausführung in Fig. 5a auch nur eine einzige vorgesehen sein, die dann durch eine Feder in Höhe der zu erwartenden Kraft vorgespannt ist.

Die in Fig. 8 dargestellte Dreifach-Kraftmeßzelle 67, 47, 57 kann auch bei einer Anhängerkupplung 1 nach Fig. 1 Anwendung finden, wobei die Befestigungsteile des Lagerbockes 54 durch die entsprechenden Anschlußteile, nämlich den Kupplungsflansch 5 und den Anschlußflansch 6 ersetzt würden.

Obwohl es vorteilhaft ist, wenn alle drei Kraftmeßzellen 67, 47, 57 nur in einem Lagerbock 54 angeordnet sind, können beispielsweise auch die Horizontalkräfte durch die Kraftmeßzellen 47 und 57 in einem Lagerbock 54 gemessen werden, während die Kraftmeßzelle 67 für die Stützkraftmessung in dem zweiten Lagerbock 54 angeordnet ist.

Es sei darauf hingewiesen, daß bei der Kraftmeßzelle gemäß Fig. 1 zur Ableitung von verhältnismäßig hohen Seitenkräften die Höhe des Spalts 9 größer gewählt wird als der Durchmesser des Kolbens 7a, vorzugsweise sogar größer als der Durchmesser desselben.

Bei dem Ausführungsbeispiel nach den Figuren 6 bis 8 ist es auch möglich, seitliche Kräfte zu messen, die auf den Anhänger wirken und zwar dann, wenn eine Kraftmeßzelle mit analogem Aufbau mit Wirkung in Querrichtung in den Lagerbock oder in den Übergang zwischen der Achse 55 und dem Lagerbock 54 angeordnet wird.

Die Erfindung ist anwendbar auf Anhängerkupplungen insbesondere an Kraftfahrzeuggespannen und bei Eisenbahnwaggons.

## Patentansprüche

1. Kraftmeßvorrichtung (27) mit einem starren inneren Kolbenelement (24a, 24b, 24c) und einem starren zylindrischen Außenelement (24) mit einer zu Umfangsflächen des Innenelements komplementären Innenkontur, einem engen Ringspalt (30a, 30b) zwischen gegenüberliegenden Flächen des inneren und äußeren Elements; elastomerem, im wesentlichen blasenfreiem Material (30), das den Ringspalt (30a, 30b) füllt und fest an den Kontaktflächen haftet; einem zwischen radialen Flächen des Innen- und Außenelements gebildeten zylindrischen Raum (30c), der ebenfalls mit dem elastomeren Material gefüllt ist; und Drucksensorvorrichtungen (31), die in Druckübertragungskontakt mit dem elastomeren Material sind;
gekennzeichnet durch
Einrichtungen (24f) zum Vorspannen der Kraftmeßvorrichtung in unbelastetem Zustand.

2. Vorrichtung nach Anspruch 1, dadurch gekennzeichnet, daß die Vorspannungseinrichtungen (24f) eine Federvorrichtung aufweisen, die das Innen- und das Außenelement im Ringraumbereich (30c) gegeneinanderdrückt.

3. Vorrichtung nach Anspruch 1 oder 2, dadurch gekennzeichnet, daß die Vorspannungseinrichtungen zwischen Anschlägen (24c, 27b) des Innen- und Außenelements abgestützt sind.

4. Vorrichtung nach Anspruch 2 oder 3, dadurch gekennzeichnet, daß die Federvorrichtung (24f) ein Tellerfederpaket aufweist.

5. Vorrichtung nach einem der Ansprüche 1 bis 4, dadurch gekennzeichnet, daß Begrenzungsanschlagsvorrichtungen (24c, 27b) für die Relativbewegung des Innen- und Außenteils in Dehnungsrichtung vorgesehen sind.

6. Vorrichtung nach einem der vorhergehenden Ansprüche, dadurch gekennzeichnet, daß der enge Ringspalt in einen ersten und zweiten Ringspaltbereich (30a, 30b) unterteilt ist, die unterschiedliche Ringdurchmesser aufweisen, wobei in einer Übergangsstufe der zylindrische Raum als Ringraum (30c) ausgebildet ist.

7. Vorrichtung nach einem der Ansprüche 1 bis 5, dadurch gekennzeichnet, daß der zylindrische Raum (10) zwischen inneren Stirnflächen des Kolbenelements (7a) und des Außenelements (8) angeordnet ist.

8. Vorrichtung nach einem der vorhergehenden Ansprüche, dadurch gekennzeichnet, daß die Drucksensorvorrichtung (11, 31) die Form einer Zündkerze aufweist, die in das zylindrische Außenelement (8; 27) derart einschraubbar ist, daß die Stirnseite des Drucksensors (11, 31) in Druckübertragungskontakt mit dem elastomeren Material (10; 30) im zylindrischen Raum ist.

9. Vorrichtung (37) nach einem der vorhergehenden Ansprüche, dadurch gekennzeichnet, daß die Drucksensorvorrichtung (31) innerhalb des Kolbenelements (37a) angeordnet ist.

10. Kraftmeßanordnung, gekennzeichnet durch zwei gegeneinander angeordnete Kraftmeßvorrichtungen (47, 57) nach einem der vorhergehenden Ansprüche.

## Claims

1. A force measuring device (27) comprising a rigid interior piston element (24a, 24b, 24c) and a rigid cylindrical exterior element (24) having an interior contour complementary to peripheral surfaces of said interior element, a narrow annular gap (30a, 30b) between opposing surfaces of said interior and exterior elements; an elastomeric material (30) being essentially bubblefree, filling said annular gap (30a, 30b) and fixedly adhering to the contact surfaces; a cylindrical recess (30c) formed between radial surfaces of said interior and exterior elements and also filled by said elastomeric material; and pressure sensor means (31) being in pressure transmitting contact with said elastomeric material;
characterized by
means (24f) for biasing said force measuring device in an unloaded condition.

2. The device of claim 1, characterized in that said biasing means (24f) include a spring means forcing said interior against said exterior element in said annular recess portion (30c).

3. The device of claim 1 or 2, characterized in that said biasing means are supported between stops (24c, 27b) of said interior and exterior elements.

4. The device of claim 2 or 3, characterized in that said spring means (24f) includes a cup spring set.

5. The device of any of claims 1 to 4, characterized in that said backstop means (24c, 27b) are provided for relatively moving said interior and exterior parts in elongation direction.

6. The device of any of the preceding claims, characterized in that said narrow annular gap is subdivided in first and second annular gap portions (30a, 30b) having different ring diameters, said cylindrical recess being formed as an annular recess (30c) in a transition stage.

7. The device of any of claims 1 to 5, characterized in that said cylindrical recess (10) is located between interior front surfaces of said piston element (7a) and said exterior element (8).

8. The device of any of the preceding claims, characterized in that said pressure sensor means (11, 31) has the shape of a spark plug to be screwed into said cylindrical exterior element (8; 27) such that the front end of said pressure sensor (11, 31) is in pressure transmitting contact with said elastomeric material (10; 30) in said cylindrical recess.

9. A device (37) of any of the preceding claims, characterized in that said pressure sensor device (31) is located inside said piston element (37a).

10. A force measuring arrangement, characterized by two force measuring devices (47, 57) of one of the preceding claims, arranged in opposition to each other.

## Revendications

1. Dispositif pour mesurer la force (27) comprenant un élément de piston (24a, 24b, 24c) interne fixe et un élément externe (24) fixe et cylindrique présentant un contour intérieur complémentaire aux surfaces périphériques de l'élément interne, comprenant également une fente annulaire (30a, 30b) étroite entre des surfaces opposées de l'élément interne et de l'élément externe, un matériau élastomère (30) essentiellement compact qui remplit la fente annulaire (30a, 30b) et qui adhère solidement aux surfaces de contact, un espace cylindrique (30c) formé entre des surfaces radiales de l'élément interne et de l'élément externe, qui est également remplit de matériau élastomère, et des dispositifs de captage de la pression (31) qui sont en contact de transmission de la pression avec le matériau élastomère, caractérisé par des dispositifs (24f) pour précontraindre le dispositif de mesure de la force à l'état non chargé.

2. Dispositif selon la revendication 1, caractérisé en ce que les dispositifs de précontrainte (24f) présentent un dispositif à ressort qui appuie l'élément interne et l'élément externe l'un contre l'autre dans la zone de l'espace annulaire (30c).

3. Dispositif selon la revendication 1 ou 2, caractérisé en ce que les dispositifs de précontrainte prennent appui entre des butées (24c, 27b) de l'élément interne et de l'élément externe.

4. Dispositif selon la revendication 2 ou 3, caractérisé en ce que le dispositif à ressort (24f) présente un ressort Belleville.

5. Dispositif selon l'une des revendications 1 à 4, caractérisé en ce que sont prévus des dispositifs à butées de limitation (24c, 27b) pour le mouvement relatif de l'élément interne et externe dans le sens de l'allongement.

6. Dispositif selon l'une des revendications précédentes, caractérisé en ce que la fente annulaire étroite est subdivisée en une première et une seconde zone de fente annulaire (30a, 30b) présentant des diamètres annulaires différents, l'espace cylindrique étant réalisé en tant qu'espace annulaire (30c) dans une zone de transition.

7. Dispositif selon l'une des revendications 1 à 5, caractérisé en ce que l'espace cylindrique (10) est disposé entre des surfaces frontales internes de l'élément de piston (7a) et de l'élément externe (8).

8. Dispositif selon l'une des revendications précédentes, caractérisé en ce que le dispositif de captage de la pression (11, 31) présente la forme d'une bougie d'allumage qui peut être vissée dans l'élément cylindrique externe (8, 27) de manière à ce que la face frontale du capteur de pression (11, 31) soit en contact de transmission de la pression avec le matériau élastomère (10, 30) dans l'espace cylindrique.

9. Dispositif (37) selon l'une des revendications précédentes, caractérisé en ce que le dispositif de captage de la pression (31) est disposé à l'intérieur de l'élément de piston (37a).

10. Disposition pour mesurer la force, caractérisée par deux dispositifs pour mesurer la force (47, 57) disposés l'un en face de l'autre selon l'une des revendications précédentes.
